# EUROPEAN PATENT SPECIFICATION

(11) **EP 2 108 708 B1**
(45) Date of publication and mention of the grant of the patent: **17.09.2014**
(21) Application number: 09165952.4
(22) Date of filing: 15.03.2005
(51) Int. Cl.: C22B 23/00

(54) **Processes for leaching and recovering nickel or cobalt**
Auslaugungsverfahren und Verfahren zur Gewinnung von Nickel oder Cobalt
Méthode de lessivage et méthode de récupération du nickel ou du cobalt

(30) Priority: 31.03.2004 JP 2004108203
(43) Date of publication of application: 14.10.2009
(62) Divisional of application: 05720833.2
(73) Proprietor: Pacific Metals Co., Ltd., Chiyoda-ku, Tokyo 100-0004 (JP)
(72) Inventor: Yakushiji, Hiromasa, Aomori 031-8617 (JP); Ito, Seiji, Aomori 031-8617 (JP); Miura, Kazuhiko, Aomori 031-8617 (JP); Shimamori, Mitsuo, Aomori 031-8617 (JP)
(74) Representative: Cabinet Plasseraud

(56) References cited:
- EP-A- 0 547 744
- WO-A-01/32943
- WO-A-03/093517
- US-A- 4 415 542
- US-A- 4 548 794
- US-B1- 6 350 420

## Description

### TECHNICAL FIELD

This invention relates to processes for leaching and for recovering nickel or cobalt from an oxide ore.

### BACKGROUND ART

As processes for leaching nickel or cobalt from an oxide ore containing the metal using sulfuric acid, an atmospheric leaching process where a sulfuric acid solution containing nickel or cobalt is obtained at an atmospheric pressure (Non-Patent Document 1, Non-Patent Document 2) and a pressure leaching process where a sulfuric acid solution containing nickel or cobalt is obtained at a high temperature and a high pressure (Non-Patent Document 3) are known.
Non-Patent Document 1: Proc. Australas. Inst. Metall. No. 265, March. 1978
Non-Patent Document 2: The metal. Soc, 1988 p447
Non-Patent Document 3: Journal of Metals. March, 1960, P206
Non-Patent Document 4: ISIJ International Vol43 (2003) No2 p181 to p186

WO 03/093517 and WO 01/32943 disclose a process for leaching nickel and cobalt from an oxide ore containing nickel or cobalt and iron, comprising the steps of separating said oxide ore into high MgO fraction and low MgO fraction; leaching the low MgO fraction with sulfuric acid under addition of a reducing agent such as sulphur dioxide gas or sodium-free metabisulphite or sulphite; and reacting the leachate obtained with the high MgO fraction.

### DISCLOSURE OF THE INVENTION

However, as described in Non-Patent Document 2, during leaching an oxide ore containing nickel, cobalt, magnesium and iron by sulfuric acid at an atmospheric pressure, not only nickel and cobalt but also iron are leached; specifically, attempting to leach each of nickel and cobalt to 80 wt% or more, iron is also leached to 15 wt% or more. In general, since an oxide ore containing nickel or cobalt contains iron 10 to 40 times as much as nickel, the process described in the publication may lead to increase in consumption of sulfuric acid in leaching and a higher iron concentration in a leachate, which may lead to a higher cost for removing the iron. Thus, the process has a problem in a cost.

Non-Patent Document 4 (a recent research report on atmospheric leaching) has described that under a mixed gas atmosphere of CO/CO₂ (30/70 vol%) and a temperature of 700 °C, nickel and cobalt compounds may be reduced into metals and iron may be converted into magnetite, to leach 80 wt% to 90 wt% of nickel and 20 wt% to 30 wt% of iron at a temperature of 30 °C to 70 °C. This process, however, requires leaching at a temperature of 700 °C under a reduction atmosphere, leading to significant energy consumption. Thus, the process has many problems in its practical use.

On the contrary, Non-Patent Document 3 has described that an oxide ore can be pressure-leached by sulfuric acid at a high temperature and a high pressure, to achieve an improved leaching rate for nickel or cobalt while minimizing iron leaching. Therefore, it results in reduction in the amount of sulfuric acid and in a cost for removing iron. However, since the process is sulfuric acid leaching at a high temperature and a high pressure, the use of an autoclave is essential and the autoclave should be made of an expensive material such as titanium. Also, in comparison with leaching at an atmospheric pressure, an energy consumption is increased. Furthermore, since a scale adheres and grows on the inside wall of the autoclave, an operation should be sometimes stopped for removing the scale, leading to reduction in an operation rate.

Further, as one common problem in the processes described in the above documents, there is problem that it is difficult to achieve a high leaching rate for cobalt stably. Among oxide ores containing nickel, cobalt, magnesium and iron, there are oxide ores that contain many trivalent cobalt compound. The trivalent cobalt compound which cannot be decomposed by sulfuric acid makes it difficult to improve a leaching rate for cobalt. Thus, a leaching rate of cobalt is sometimes lower than that of nickel, and there is a problem that a recovery rate for cobalt is decreased.

In view of the above circumstances, an objective of the present invention is to provide processes for leaching and recovering nickel or cobalt from an oxide ore containing nickel or cobalt and iron, by which a higher leaching rate or recovery rate for cobalt can be improved.

According to the present invention, defined by the claims, there is provided a process for leaching nickel or cobalt from an oxide ore containing nickel or cobalt and iron, comprising: a leaching step where a reducing agent containing iron and sulfuric acid are added to the oxide ore to obtain a sulfuric acid leachate containing nickel or cobalt and a leaching residue.

According to the present invention, the reducing agent containing iron is used to reduce a cobalt component in the oxide ore. By using such the reducing agent, a leaching rate for cobalt can be improved while ensuring stability in the process.

According to the invention, there is provided a process for leaching nickel or cobalt from an oxide ore containing nickel or cobalt and iron, comprising: a classification step where the oxide ore is classified into a small particle oxide ore and a large particle oxide ore; a leaching step where a reducing agent and sulfuric acid are added to the small particle oxide ore to obtain a sulfuric acid leachate containing nickel or cobalt and a leaching residue; and a reaction step where the sulfuric acid leachate containing the leaching residue is reacted with the large particle oxide ore to obtain a reaction solution containing nickel or cobalt and a reaction residue containing iron.

Leaching cobalt is more difficult for the small particle oxide ore than the large particle oxide ore. Therefore, in the above aspect, the ore is first classified into the small particle oxide ore and the large particle oxide ore. Then, the small particle oxide ore obtained is leached, and then the sulfuric acid leachate obtained is reacted with the large particle oxide ore to obtain the reaction solution containing nickel or cobalt. Thus, since the small particle oxide ore in which cobalt is difficult to be leached is separated and is introduced into the process during the step where consumption rates of the reducing agent and sulfuric acid are low, a leaching rate for cobalt can be significantly improved.

On the other hand, the large particle oxide ore generally contains magnesium more than the small particle oxide ore. Therefore, by introducing the large particle oxide ore into the reaction step as described above, the reaction in the reaction step can be effectively accelerated.

In the present invention, both the leaching step and the reaction step may be performed at a temperature of 90 °C or higher. Having such process, a leaching rate for cobalt can be further improved. Also, both the leaching step and the reaction step may be performed at an atmospheric pressure. Having such process, increase in a facility cost can be prevented.

According to the present invention, there is provided a process for recovering nickel or cobalt from an oxide ore containing nickel or cobalt and iron, comprising: a leaching step where sulfuric acid, a sodium salt and a reducing agent are added to the oxide ore to obtain a sulfuric acid leachate containing nickel or cobalt and a leaching residue; a reaction step where the sulfuric acid leachate containing the leaching residue is reacted with magnesium for adjusting a pH to obtain a reaction solution containing nickel or cobalt and a reaction residue containing iron; and a neutralization step where the reaction solution containing the reaction residue is neutralized with a neutralizing agent to obtain a neutralization solution containing nickel or cobalt and a neutralization residue containing iron.

According to the present invention, in the leaching step, sulfuric acid, a sodium salt and iron can be reacted to generate Natrojarosite while using sulfuric acid and a reducing agent to reduce a cobalt component in the oxide ore, to improve a leaching rate for nickel or cobalt. Also, in the reaction step, a pH can be adjusted using magnesium. Since iron can be precipitated before the neutralization step, increase in cost due to treating iron in the neutralization step can be prevented. Thus, a recovery rate for nickel or cobalt can be more efficiently improved.

Also, the process may comprise classifying the oxide ore into a small particle oxide ore and a large particle oxide ore containing magnesium before the leaching step; leaching nickel or cobalt from the small particle oxide ore in the leaching step; and reacting the sulfuric acid leachate containing the leaching residue with magnesium contained in the large particle oxide ore to adjust a pH in the reaction step. Thus, while reducing a cost for recovering nickel or cobalt, a leaching rate for nickel or cobalt can be further improved.

In addition, the process may further comprise separating the neutralization solution and the neutralization residue by solid-liquid separation using a thickener with a flocculant after the neutralization step.

Further, both the leaching step and the reaction step may be performed at a temperature of 90 °C or higher. Having such process, a leaching rate for cobalt can be further improved. Furthermore, both the leaching step and the reaction step may be performed at an atmospheric pressure. Having such process, increase in a facility cost can be prevented.

As used herein, the term "atmospheric pressure" encompasses a pressure near the atmospheric pressure.

According to the present invention, in a process for leaching or recovering nickel or cobalt from an oxide ore containing nickel or cobalt and iron, a leaching rate or a recovering rate for nickel or cobalt can be improved by reducing a cobalt component in the oxide ore with sulfuric acid and a reducing agent.

### BRIEF DESCRIPTION OF THE DRAWINGS

The above-mentioned object and other objects, features and advantages will be more clearly understood with reference to suitable embodiments described below and the accompanied drawings.
Fig. 1 is a flow chart illustrating a process in an embodiment according to the present invention.
Fig. 2 is a flow chart illustrating a process in an embodiment according to the present invention.

### BEST MODE FOR CARRYING OUT THE INVENTION

Hereinafter, an embodiment of the present invention will be described with reference to the drawings and tables. Here, an amount for quantity consumed and quantity added stand for the quantity consumed and the quantity added based on their weight. In all the drawings, equivalent components are denoted by the same symbol, whose description is not shown as appropriate.

In the present embodiment, for example, oxides ores whose compositions are shown in Table 1 may be used. Two kinds of oxide ores described in Table 1 may be derived from different mines. (Table 1)

**Table 1**

| Oxide ore No. | Ni | Co | Fe | Mg |
|---|---|---|---|---|
| No-1 | 1.65 | 0.077 | 25.4 | 10.8 |
| No-2 | 1.71 | 0.235 | 22.7 | 11.1 |

### First Embodiment

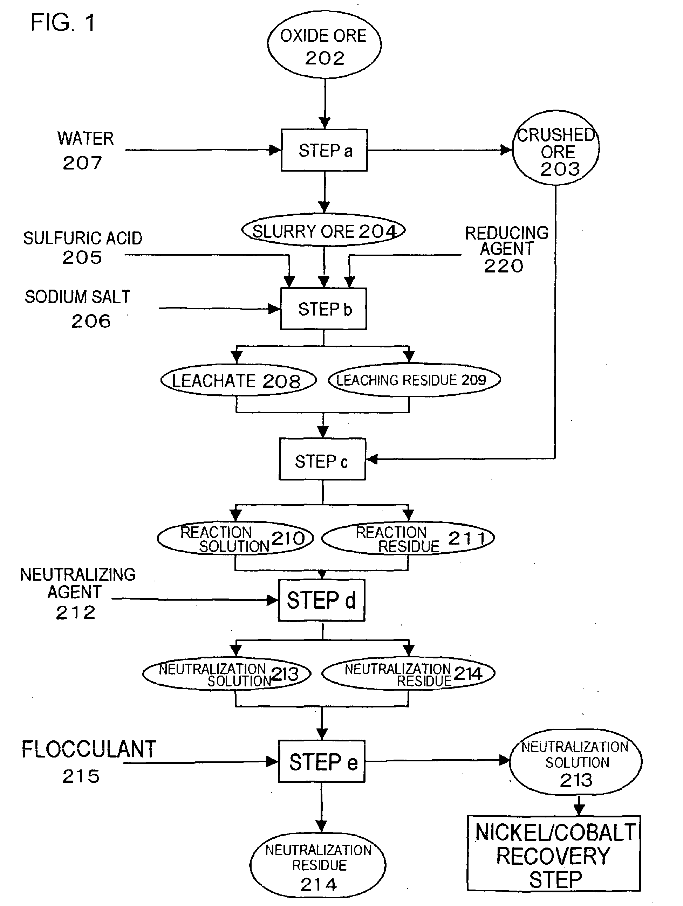

In Fig. 1, a flow chart illustrating recovery of nickel and cobalt from an oxide ore containing nickel, cobalt and iron is shown.

Hereinafter, there will be described a process flow in the present embodiment.

First, in step a (classification step), an oxide ore 202 is classified into an over-size ore and an under-size ore. The under-size ore is treated with water 207 to obtain a slurry ore 204, and the over-size ore is crushed into a crushed ore 203.

Next, in step b (leaching step), sulfuric acid 205 and a reducing agent 220 are added to the slurry ore 204 to reduce a trivalent cobalt oxide, and to leach the ore with sulfuric acid 205 to obtain a sulfuric acid leachate 208 containing nickel and cobalt and a leaching residue 209. Here, the leaching residue 209 contains Natrojarosite generated by a reaction of iron leached from the slurry ore 204 with sulfuric acid 205 and a sodium salt 206.

Then, in step c (reaction step), by reacting free sulfuric acid in the sulfuric acid leachate 208 containing the leaching residue 209 with magnesium contained in the crushed ore 203 obtained by crushing in the classification step, free sulfuric acid is consumed for adjusting a pH to obtain a reaction solution 210 and a reaction residue 211. By the pH adjustment, by precipitating Natrojarosite in the reaction residue 211, an iron concentration in the reaction solution 210 can be reduced.

Next, in step d (neutralization step), a neutralizing agent 212 is added to the reaction solution 210 containing the reaction residue 211 for pH adjustment to obtain a neutralization solution 213 and a neutralization residue 214. Here, since an iron concentration has been reduced in the reaction solution 210 by precipitating Natrojarosite in the previous reaction step, the added amount of the neutralizing agent 212 can be reduced.

Subsequently, in step e (solid-liquid separation step), a flocculant 215 is added to the neutralization solution 213 containing the neutralization residue 214 and then by employing a thickener, solid-liquid separation is performed to separate the neutralization solution 213 and the neutralization residue 214.

Next, the neutralization solution 214 is processed in the step of recovering nickel and cobalt to recover nickel and cobalt.

Hereinafter, there will be described the detailed each steps.

### Step a: Classification step

An oxide ore 202 such as two kinds of oxide ores No. 1 and No. 2 derived from different mines containing nickel, cobalt, magnesium and iron is classified into an over-size ore and an under-size ore by a simple apparatus such as a vibrating screen. The under-size ore is treated with water 207 to obtain a slurry ore 204, and the over-size ore is crushed by an apparatus such as ball mill to obtain a crushed ore 203. Although there are no particular restrictions to a classification size by a vibrating screen, for example, a mesh of 0.5 mm to 2 mm both inclusive may be used from the view of improving process stability.

When classifying the oxide ore by a screen with a mesh of about 0. 5 mm to 2 mm both inclusive, an under-size ore tends to have a higher iron content and a lower magnesium content, while an over-size ore tends to have a lower iron content and a higher magnesium content.

Water 207 may be, in addition to river water or ground water commonly used, marine water. Here, when applying a process according to the present embodiment, the process may be carried out around a mine from the view of an economical efficiency including a cost. Looking around an area where the mine is operated, it is not always easy to ensure adequate water such as river water and ground water. Furthermore, by using marine water as water 207, a sodium salt contained in the marine water may be utilized to obtain an effect to be able to control the residual amount of iron leached from an oxide ore in a leachate or a reaction solution in the leaching step or the reaction step as a later step.

### Step b: Leaching step

The slurry ore 204 obtained in step a can be leached, for example, by adding sulfuric acid 205 and a reducing agent 220 at an atmospheric pressure and a temperature of not less than 90 °C and not more than 100 °C, to obtain a sulfuric acid leachate 208 containing nickel, cobalt, magnesium and iron and a leaching residue 209.

Leaching at a 90 °C or higher can improve a leaching rate for nickel and cobalt in the slurry ore 204. Thus, a leaching time for nickel and cobalt in the slurry ore can be reduced and increasing a leaching rate for nickel and cobalt. By leaching of nickel and cobalt contained in the slurry ore at 100 °C or lower, leaching nickel and cobalt at a temperature equal to or lower than the boiling point of water can be performed. Thus, a container of the apparatus for pressurizing an apparatus for leaching nickel and cobalt may not be pressurized.
Consequently, an increase in a facility cost can be prevented.

Here, although a leaching temperature is defined as 90 °C or higher in the above description, for instance, a temperature of 70 °C or higher may be appropriately selected. Alternatively, nickel and cobalt in the slurry ore 204 may be leached at more than 100°C. Also, nickel and cobalt in the slurry ore 204 may be leached under a pressure other than an atmospheric pressure.

The added amount of sulfuric acid may be 0.5 to 0.8 times both inclusive of that of the used oxide ore 202. With sulfuric acid in 0.5 times or more amount, nickel and cobalt can be sufficiently leached, and with sulfuric acid in about 0.8 times amount, a leaching rate for nickel and cobalt is in equilibrium. Therefore, using sulfuric acid in 0.8 times or less amount, the amount of excessive sulfuric acid (free sulfuric acid) may be reduced. Thus, while maintaining a leaching rate for nickel and cobalt from an oxide ore, increase in a cost for recovering nickel and cobalt can be reduced.

As the reducing agent 220, iron powder, sodium sulfite and a mixture thereof are employed. Among these, iron such as iron powder may be used. When using iron powder as the reducing agent 220, it can exert good effect as the reducing agent 220 in a smaller amount. Furthermore, since iron powder is inexpensive, while increase in a process cost can be reduced, a leaching rate for nickel and cobalt can be improved stably. A particle size of the iron powder may be a diameter of about 1 mm, and iron with its surface being not oxidized may be used. In addition to iron powder, iron scrap obtained by grinding by a grinder may be used.

The added amount of the reducing agent 220 may be appropriately selected, depending on its type. When using iron powder, it may be added in an amount within a range of 0.1 wt% to 1 wt%, particularly 0.2 wt% to 0.5 wt% to the amount of the oxide ore 202. In addition, when using sodium sulfite, it may be added in an amount within a range of 1 wt% to 10 wt%, particularly 5 wt% to 8 wt% to the amount of the oxide ore 202. By adding within the above range, iron powder as the reducing agent 220 may be adequately effective to further efficiently improve a leaching rate of nickel and cobalt, particularly of cobalt. Thus, while reducing a cost, a recovery rate for nickel and cobalt may be further improved.

By adding the reducing agent 220 within the above range, the reducing agent 220 may be adequately effective to further efficiently improve a leaching rate of nickel and cobalt, particularly of cobalt. Thus, while reducing a cost for removing iron, a recovery rate for nickel and cobalt may be further improved.

Addition of a reducing agent would be effective for improving a leaching rate of nickel and cobalt, particularly of cobalt because of the following reason.

That is to say, cobalt in the oxide ore 202 exists as a bivalent oxide (CoO) and a trivalent oxide (Co₂O₃), and a ratio of these oxides would be dependent on a mining place. Binding state between cobalt and oxygen is stronger and more stable in Co₂O₃ than in CoO. It is, therefore, not easy to decompose the bond between cobalt and oxygen in a trivalent cobalt oxide contained in the slurry ore 204 with sulfuric acid 205. Thus, it would be estimated that by adding the reducing agent 220 in addition to sulfuric acid 205, a binding power between cobalt and oxygen in the trivalent cobalt oxide becomes weaker and the cobalt is reduced from trivalent to bivalent, allowing cobalt to be more easily leached with sulfuric acid 205.

Also, when using iron powder as the reducing agent 220, it can exert a comparable effect as the reducing agent 220 in a smaller amount of the reducing agent 220. Furthermore, since iron powder is inexpensive, when using iron powder as the reducing agent, increase in a process cost can be prevented while improving a leaching rate for nickel and cobalt.

In addition, in step b, by using the under-size ore classified in the classification step, the following effect can be obtained. In other words, in comparison with the crushed ore 203 from the over-size ore, leaching of nickel and cobalt in the oxide ore is more difficult in the under-size ore. Furthermore, since the crushed ore 203 from the over-size ore contains magnesium in a higher content compared to the under-size ore, free sulfuric acid used for leaching may be consumed. Thus, by using the under-size ore and an excessive amount of sulfuric acid and reducing a trivalent cobalt oxide into a bivalent cobalt oxide that is easier to be leached with the reducing agent 220 at the same time in the leaching step, more nickel and cobalt in the oxide ore may be leached to further improve a leaching rate for nickel and cobalt.

When using river water or ground water as water in step a, a sodium salt 206 such as sodium sulfate and sodium chloride is added in step b.
An added content of sodium derived from the sodium salt 206 may be about 0.01 to 0.05 times of a content of an oxide ore 202. On the other hand, when using marine water as water 207, an additional sodium salt 206 is not necessary because marine water contains sodium in about 10 g/L. Thus, while preventing increase in a cost for recovering nickel and cobalt, nickel and cobalt can be leached from the oxide ore.

Here, in the presence of 0.01 times amount of added sodium, iron leached from the oxide ore can be reacted with sodium sulfate in the sulfuric acid leachate 208 to reduce an iron concentration in the sulfuric acid leachate 208.

It may be assumed that sodium can control an iron leaching in a sulfuric acid leachate 208 in accordance with chemical reaction equations (1) to (3).

FeO(OH)·(oxide ore) + 3/2H₂SO₄ = 1/2Fe₂(SO₄)₃·(liquid) + 2H₂O (1)

Fe₂(SO₄)₃·(liquid) + 1/3Na₂SO₄ + 4H₂O = 2/3NaFe₃(SO₄)₂(OH)₆·(solid) + 2H₂SO₄ (2)

Fe₂(SO₄)₃·(liquid) + 2/3NaCl + 4H₂O = 2/3NaFe₃(SO₄)₂(OH)₆·(solid) + 2/3HCl + 5/3H₂SO₄ (3)

That is, iron in the oxide ore is leached with excessive sulfuric acid and combined with sodium in the sulfuric acid leachate to generate Natrojarosite, resulting in precipitation of part of iron leached. Thus, iron leached from the oxide ore is contained in a leachate, so that increase in its amount involved in the next reaction step can be reduced.
So, in reaction step, iron can be sufficiently removed by precipitation as Natrojarosite. Consequently, in the neutralization step after the reaction process, increase in a cost for precipitating iron in a neutralization solution can be prevented. Furthermore, by generating Natrojarosite by adding the sodium salt 206 and reducing a trivalent cobalt oxide into a bivalent cobalt oxide that is easy to be leached by adding the reducing agent 220 in the leaching step, a leaching rate for nickel and cobalt with sulfuric acid 205 can be improved at the same time.
Thus, while preventing increase in a cost for recovering nickel and cobalt, nickel and cobalt can be more efficiently leached.

Also, with sodium added in about 0.05 times amount, a generation rate of Natrojarosite and a precipitation rate of Natrojarosite are in equilibrium. Therefore, by adding sodium in 0.05 times amount or less, addition of an excessive amount of sodium can be prevented, resulting in leaching nickel and cobalt while preventing increase in a cost for recovering nickel and cobalt from the oxide ore.

A leaching time may be 1 hour to 10 hours both inclusive; for example, 3 hours to 6 hours. A facility for the leaching step may be a vessel with a stirrer commonly used, which may be made of, for example, stainless steel or a rubber-lined steel. Therefore, nickel and cobalt can be leached from the oxide ore 202 without using, for example, a titanium-lined autoclave which is used in pressure leaching at a high temperature and a high pressure, resulting in leaching nickel and cobalt while preventing increase in a cost for recovering nickel and cobalt. Step c: Reaction process

The sulfuric acid leachate 208 and the leaching residue 209 obtained in step b is reacted with the crushed ore 203 from the over-size ore obtained in step a, for instance, at an atmospheric pressure and a temperature of not less than 90 °C and not more than 100 °C in accordance with equations (4) to (7) described later. In accordance with a reaction equation described later, a reaction solution 210 containing nickel, cobalt, magnesium and a small amount of iron and a reaction residue 211 can be obtained.

In this step, the reducing agent 220 may be added. Here, the reducing agent 220 may not be added in step b or alternatively may be added both in step b and in this step.

Here, as the reducing agent 220, for instance, iron powder, sodium sulfite and a mixture thereof may be used. When using iron powder, it may be added in an amount within a range of not less than 0.1 wt% and not more than 1 wt%, particularly not less than 0.2 wt% and not more than 0.5 wt% to the amount of the oxide ore 202. A particle size of the iron powder may be a diameter of about 1 mm, and iron with its surface being not oxidized may be used. In addition, when using sodium sulfite, it may be added in an amount within a range of not less than 1 wt% and not more than 10 wt%, particularly not less than 5 wt% and not more than 8 wt% to the amount of the oxide ore 202.

Also, in addition to iron powder, sodium sulfite and a mixture thereof, other reducing agents may be used, including iron other than iron powder such as iron scrap formed by grinding by a grinder; alcohols such as methanol and ethanol; and reducing gases such as sulfur dioxide.

The crushed ore 203 may be added as a solid as it is, or alternatively added as a slurry with water. In this step, water may be selected from river water, ground water and marine water. Also, the water may contain a sodium salt 206 such as sodium sulfate and sodium chloride.

Here, the reaction can be performed at a temperature of 90 °C or higher to improve a leaching rate of nickel and cobalt contained in the crushed ore 203. Also, an efficiency for removing iron leached in step b as Natrojarosite by precipitation can be improved. Furthermore, the reaction at a temperature of 100 °C or lower may be a reaction in accordance with a chemical equation described later at a temperature equal to or lower than the boiling point of water. It is, therefore, not necessary to pressurize a reaction container in an apparatus for the reaction. Consequently, increase in a facility cost can be prevented.

Here, at a leaching temperature lower than 90 °C or higher than 100 °C, the reaction may be performed as a reaction in accordance with a chemical equation described later. Also, the reaction in accordance with the chemical equation described later may be performed at a pressure other than an atmospheric pressure.

In the present embodiment, an iron concentration in the sulfuric acid leachate 208 in step b is 30 g/L to 90 g/L. Although free sulfuric acid is contained in 30 g/L or more, the free sulfuric acid reacts with magnesium contained in the crushed ore 203 to reduce an iron concentration to 1/10 or less and a free sulfuric acid concentration to 1/3 or less, respectively, compared with those in the sulfuric acid leachate 208 before the reaction.

The reason may be explained by chemical reactions (4) to (7).

H₂SO₄ (free sulfuric acid) + MgO (oxide ore) = MgSO₄ (liquid) + H₂O (4)

Fe₂(SO₄)₃·(liquid) + 1/3Na₂SO₄ + 4H₂O = 2/3NaFe₃(SO₄)₂(OH)₆·(solid) + 2H₂SO₄ (5)

Fe₂(SO₄)₃·(liquid) + 2/3NaCl + 4H₂O = 2/3NaFe₃(SO₄)₂(OH)₆·(solid) + 2/3HCl + 5/3H₂SO₄ (6)

Fe₂(SO₄)₃·(liquid) + 4H₂O = 2FeO(OH)·(solid) + 3H₂SO₄ (7)

Specifically, in accordance with equation (4), free sulfuric acid in the sulfuric acid leachate 208 reacts with magnesium contained in the crushed ore 203 to reduce the amount of free sulfuric acid, resulting in increase of pH of the solution. Thus, as a pH of the liquid is increased, Natrojarosite and Goethite are generated in accordance with equations (5) to (7), resulting in precipitation of iron.

Iron and magnesium contained in the oxide ore 202 may allow the above reaction to more efficiently proceed. For example, when a component ratio of magnesium/iron is 0.125 or more, the amount of iron contained in the oxide ore 202 is relatively smaller, so that in accordance with equation (1), a relatively smaller amount of iron is leached from the oxide ore in the leaching step. Thus, an iron concentration in the reaction solution can be also reduced. Furthermore, since a relatively larger amount of magnesium is contained in the oxide ore 202, the amount of magnesium reacting with free sulfuric acid brought from the sulfuric acid leachate 208 into the reaction step is relatively larger. Therefore, in accordance with the reaction of equation (4), free sulfuric acid in the sulfuric acid leachate 208 can be sufficiently consumed with magnesium.

As described above, iron and magnesium contained in the oxide ore 202 may allow iron to be sufficiently precipitated in accordance with equations (5) to (7), resulting in reduction in an iron concentration remaining in the reaction solution 210. Thus, the amount of iron remaining in the reaction solution 210 and thus brought in the neutralization step may be reduced. Therefore, increase in a cost for precipitating iron in the neutralization step may be prevented. As a result, nickel and cobalt can be recovered while preventing increase in a cost for recovering nickel and cobalt.

There is not a particular upper limit to a component ratio of magnesium/iron; for example, 0.75 or more may be acceptable. Here, the oxide ore 202 used in the present embodiment is a limonite ore containing iron and magnesium in 20 wt% to 50 wt% both inclusive and 2.5 wt% to 15 wt% both inclusive, respectively. Thus, a component ratio of magnesium/iron is never 0.75 or more.

Also, in step c, the reason why the crushed ore 203 from the over-size ore is used is the crushed ore 203 from the over-size ore contains more magnesium than the under-size ore so that the reactions of equations (4) to (7) more effectively proceed. A reaction time may be 3 hours to 10 hours both inclusive or 4 hours to 6 hours both inclusive; that is, the reactions of equations (4) to (7) can be completed in a shorter time than the case where an oxide ore before classification is used. Here, since the crushed ore 203 from the over-size ore contains nickel and cobalt, free sulfuric acid may be reacted with magnesium to adjust a pH while leaching nickel and cobalt in the crushed ore 203, to further improve a recovery rate for nickel and cobalt. Thus, while preventing increase in a cost for recovering nickel and cobalt, a recovery rate for nickel and cobalt can be further improved.

A facility for this reaction may be a container with a stirrer commonly used, which may be made of, for example, stainless steel or a rubber-lined steel. Therefore, the reaction in this step can be performed without using an expensive facility, for example, a titanium-lined autoclave that is used in a reaction at a high temperature and a high pressure, resulting in preventing increase in a cost for recovering nickel and cobalt.

Further, this step may be performed using a ferronickel slag that contains nickel in a relatively higher content among some ferronickel slag used in the neutralization step, together with the crushed ore from the over-size ore. In this case, the slag may be used in a range such that a final pH during the reaction is less than 3. With a pH of less than 3, the solution contains free sulfuric acid, which can prevent reduction in a leaching efficiency for nickel from an oxide ore.

Furthermore, this step may be performed using, for example, an oxide ore with a relatively lower nickel content and a relatively higher magnesium content whose nickel and magnesium contents are 1 wt% or less and 15 wt% or more, respectively, that is, which is generally not used for recovering nickel and cobalt. Here, such an oxide ore often exists in, for example, a deeper layer in a nickel and cobalt mine, and is
**characterized in that** it has a relatively lower iron content. Therefore, by using the above oxide ore in step c, nickel and cobalt may be leached into a sulfuric acid solution while adjusting a pH with magnesium, to prevent amount of leached iron from being increased. As a result, while improving a recovery rate for nickel and cobalt, a cost for recovering nickel and cobalt can be reduced. Also, a magnesium-containing substance other than an oxide ore may be used.

Here, when adjusting a pH in accordance with step c, an oxide ore with a lower content of nickel and a higher content of magnesium may be used together with an oxide ore containing magnesium from an over-size ore classified in step a.

In addition, when adjusting a pH in accordance with step c, a magnesium-containing substance other than an oxide ore may be used together with an oxide ore containing magnesium from an over-size ore classified in step a.

Also, when adjusting a pH in accordance with step c, a magnesium-containing substance other than an oxide ore may be used together with the oxide ore with a lower content of nickel and a higher content of magnesium.

In addition, when adjusting a pH in accordance with step c, an oxide ore containing magnesium from an over-size ore classified in step a may be used together with the above oxide ore with a lower content of nickel and a higher content of magnesium as well as a magnesium-containing substance other than an oxide ore.

### Step d: Neutralization step

By using the reaction solution 210 and the reaction residue 211 obtained in step c and a neutralizing agent 212, a pH may be adjusted to 2 to 6 both inclusive, or alternatively, a neutralization reaction may be performed at a pH within a range of 3 to 5 both inclusive. Thus, there are obtained a neutralization solution 213 with an iron concentration of 1 g/L or less which also contains nickel, cobalt and magnesium, and a neutralization residue 214. With a pH of 2 or higher, iron may be sufficiently precipitated. With a pH of 6 or lower, most of iron can be removed by precipitation while preventing coprecipitation of nickel and cobalt. Thus, a recovery rate for nickel and cobalt can be improved.

There are no particular restrictions to a pressure in this step.
For example, a neutralization reaction may be performed using the reaction solution 210, the reaction residue 211 and the neutralizing agent 212 at an atmospheric pressure, or alternatively at a pressure other than an atmospheric pressure.

As the neutralizing agent 212, hydroxides of an alkali metal such as sodium hydroxide; carbonates of an alkali metal such as sodium carbonate; hydroxides of an alkaline earth metal such as calcium hydroxide and magnesium hydroxide; oxides of an alkaline earth metal such as calcium oxide and magnesium oxide; carbonates of an alkaline earth metal such as calcium carbonate and magnesium carbonate, which are commonly used, may be employed. Also, a ferronickel slag having a composition shown in Table 1 may be used. Further, the above neutralizing agents may be used alone or in combination of two or more.

As used herein, the term "ferronickel slag" refers to a slag containing magnesium obtained during smelting ferronickel using a magnesium-containing ore containing nickel in 2 wt% or more by pyrometallurgical smelting process. The amount of a ferronickel slag generated by pyrometallurgical smelting process is about 30 to 35 parts to 1 part of nickel 1, but only a part of the slag is effectively used.

By using, for example, a ferronickel slag containing magnesium as a neutralizing agent 212, magnesium contained in the ferronickel slag can be effectively utilized as a neutralizing agent while neutralizing the reaction solution 210 and the reaction residue 211. Thus, while effectively utilizing resources and preventing increase in a cost for recovering nickel and cobalt, nickel and cobalt can be recovered.

Also, in addition to a ferronickel slag, any agent such as calcium hydroxide, magnesium hydroxide, calcium oxide, magnesium oxide, calcium carbonate and magnesium carbonate can be used as the neutralizing agent 212 as long as it can neutralize the reaction solution 210 and the reaction residue 211.

### Step e: Solid-liquid separation step

The neutralization solution 213 and the neutralization residue 214 obtained in step d are separated by adding a flocculant 215. The flocculant 215 may be, for example, a polymer flocculant. The solid-liquid separation may be performed by a commonly used thickener method; specifically, by countercurrent washing method with a 6 or more stage thickener. Thus, the neutralization solution 213 and the neutralization residue 214 are efficiently separated into a solid and a liquid such that nickel and cobalt in the neutralization solution is recovered in a high yield of 99 wt% or more and the neutralization solution 213 containing nickel, cobalt and magnesium contains iron in a low concentration of 1 g/L or less.

Here, the flocculant 215 may be, besides a polymer flocculant, any flocculant as long as it can separate the neutralization solution 213 from the neutralization residue 214.

Also, besides countercurrent washing with a 6 or more stage thickener, solid-liquid separation into the neutralization solution 213 and the neutralization residue 214 may be performed using another type of solid-liquid separator.

As a method for recovering nickel and cobalt from the neutralization solution 213, for example, adding sodium hydro sulfide, sodium sulfide, ammonium sulfide and hydrogen sulfide to the neutralization solution 213 to recover by precipitation of nickel and cobalt as a mixed sulfide as described in Japanese Laid-open patent publication No. H6-81050, or adding a hydroxide, an oxide or a carbonate to the solution to recover by precipitation of nickel and cobalt as a mixed hydroxide or mixed carbonate as described in Japanese Laid-open patent publication No. H12-234130.

As described above process, nickel and cobalt can be efficiently recovered from an oxide ore.

There have been described one suitable embodiment of this invention. However, the present invention is not limited to the embodiments, it is, of course, apparent to the person skilled in the art that the above embodiment may be modified within the range of the present invention.

For example, although step a where the oxide ore containing nickel and cobalt is classified is performed in the above embodiment, the step a may be omitted.

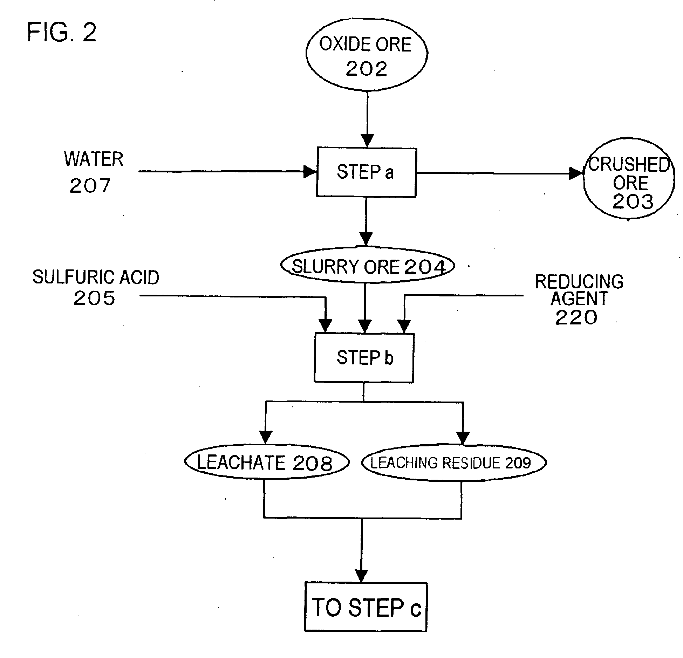

Also, although the sodium salt 206 is added in step b (leaching step) in the above embodiment, an alternative process where a sodium salt is not added may be employed. Fig. 2 is a flow chart illustrating a step according to the present embodiment. Fig. 2 shows the process till step b (leaching step). Then, by performing step c and the subsequent steps described in first embodiment, the sulfuric acid leachate 208 and the leaching residue 209 are processed, to recover nickel and cobalt. Such a process is also effective as described in the above embodiment.

In addition, although there has been described recovery of nickel and cobalt from the oxide ore 102 containing nickel, cobalt and iron in the above embodiment, nickel may be recovered from an oxide ore containing nickel and iron, while cobalt may be recovered from an oxide ore containing cobalt and iron.

### (EXAMPLES)

There will be more specifically described the present invention with reference to experimental examples. In addition, the amount of each component in oxide ores in Table 2 and Table 3 is expressed as wt% to the amount of the oxide ore.

Table 2 and Table 3 show the conditions and the results of examples and comparative examples.
(Table 2)

**Table 2**

| Ex. | Oxide ore No. | Oxide ore component (wt%) | | | | Ore classification rate (wt%) | | Water | Sodium salt added | | Reducing agent | | | Sulfuric acid/Ore | Temperature °C | |
|---|---|---|---|---|---|---|---|---|---|---|---|---|---|---|---|---|
| | | Ni | Co | Fe | Mg | ·2mm | +2mm | | Material | Na/Ore | Material | Process | Reducing agent/Ore | | Leaching | Reaction |
| Comp Ex. 1 | No-1 | 1.65 | 0.077 | 25.4 | 10.8 | 64 | 36 | Marine | None | 0 | None | None | 0 | 0.73 | 95 | 95 |
| Ex. 1 | No-1 | 1.65 | 0.077 | 25.4 | 10.8 | 64 | 36 | Marine | None | 0 | Iron powder | Atmospheric leaching | 0.003 | 0.73 | 95 | 95 |
| Ex. 2 | No-1 | 1.65 | 0.077 | 25.4 | 10.8 | 64 | 36 | Marine | None | 0 | Na sulfite | Atmospheric leaching | 0.05 | 0.73 | 95 | 95 |
| Ex.3 | No-1 | 1.65 | 0.077 | 25.4 | 10.8 | 64 | 36 | River | Na₂SO₄ | 0.025 | Iron powder | Atmospheric leaching | 0.005 | 0.73 | 95 | 95 |
| Ex. 4 | No-1 | 1.65 | 0.077 | 25.4 | 10.8 | 64 | 36 | River | NaCl | 0.025 | Na sulfite | Atmospheric reaction | 0.08 | 0.73 | 95 | 95 |
| Ex. 5 | No-1 | 1.65 | 0.077 | 25.4 | 10.8 | 64 | 36 | Marine | None | 0 | Iron powder | Atmospheric reaction | 0.005 | 0.73 | 95 | 95 |
| Comp Ex.2 | No-2 | 1.71 | 0.235 | 22.7 | 11.1 | 61 | 39 | Marine | None | 0 | None | None | 0 | 0.73 | 95 | 95 |
| Ex. 6 | No-2 | 1.71 | 0.235 | 22.7 | 11.1 | 61 | 39 | Marine | None | 0 | Iron powder | Atmospheric leaching | 0.003 | 0.73 | 95 | 95 |
| Ex. 7 | No-2 | 1.71 | 0.235 | 22.7 | 11.1 | 61 | 39 | Marine | None | 0 | Na sulfite | Atmospheric leaching | 0.05 | 0.73 | 95 | 95 |
| Ex. 8 | No-2 | 1.71 | 0.235 | 22.7 | 11.1 | 61 | 39 | River | Na₂SO₄ | 0.025 | Iron powder | Atmospheric leaching | 0.005 | 0.73 | 95 | 95 |
| EX. 9 | No-2 | 1.71 | 0.235 | 22.7 | 11.1 | 61 | 39 | River | NaCl | 0.025 | Na sulfite | Atmospheric reaction | 0.08 | 0.73 | 95 | 95 |
| Ex.10 | No-2 | 1.71 | 0.235 | 22.7 | 11.1 | 61 | 39 | Marine | None | 0 | Iron powder | Atmospheric reaction | 0.005 | 0.73 | 95 | 95 |

(Table 3)

**Table 3**

| Example | Oxide Ore No. | Atmospheric leaching rate (wt%) | | | | Atmospheric Solution (g/L) | | | |
|---|---|---|---|---|---|---|---|---|---|
| | | Ni | Co | Fe | Mg | Ni | Co | Fe | Mg |
| Comp. Ex. 1 | No-1 | 88.9 | 63.6 | 5.7 | 87.8 | 5.53 | 0.20 | 4.32 | 38.38 |
| Example 1 | No-1 | 89.0 | 80.2 | 6.1 | 80.9 | 5.70 | 0.27 | 5.75 | 34.05 |
| Example 2 | No-1 | 89.5 | 78.1 | 2.0 | 83.8 | 5.63 | 0.26 | 1.87 | 34.01 |
| Example 3 | No-1 | 89.1 | 82.5 | 7.5 | 81.0 | 5.71 | 0.29 | 7.14 | 34.06 |
| Example 4 | No-1 | 88.0 | 82.8 | 1.3 | 80.3 | 5.88 | 0.29 | 1.16 | 35.54 |
| Example 5 | No-1 | 88.9 | 82.8 | 7.6 | 79.7 | 5.60 | 0.26 | 7.18 | 34.34 |
| Comp. Ex. 2 | No-2 | 87.0 | 13.3 | 4.5 | 80.4 | 6.56 | 0.17 | 4.39 | 35.30 |
| Example 6 | No-2 | 92.2 | 87.0 | 5.6 | 73.8 | 6.15 | 0.80 | 5.53 | 32.39 |
| Example 7 | No-2 | 92.4 | 77.9 | 0.5 | 80.1 | 6.19 | 0.62 | 0.45 | 37.83 |
| Example 8 | No-2 | 91.1 | 95.7 | 7.4 | 70.5 | 6.08 | 0.83 | 7.16 | 34.26 |
| Example 9 | No-2 | 92.2 | 95.1 | 1.5 | 76.3 | 6.14 | 0.82 | 1.31 | 36.22 |
| Example 10 | No-2 | 88.2 | 95.8 | 7.5 | 63.7 | 5.72 | 0.79 | 6.87 | 31.06 |

In Example 1 to Example 5 and Comparative Example 1, an oxide ore No. 1 (Ni : 2.65 %, Co: 0.077 %, Fe : 25.4 %, Mg : 10.8%) was used.

In Example 6 to Example 10 and Comparative Example 2, an oxide ore No. 2 (Ni : 1.71 %, Co : 0.2357 %, Fe : 22.7 %, Mg : 11.1 %) from a different mine from that for oxide ore No. 1 was used.

### (Comparative Example 1)

The oxide ore No. 1 was classified by a 2 mm screen into a -2 mm oxide ore and a +2 mm oxide ore in 64 wt% and 36 wt%, respectively. The whole amount of the +2 mm oxide ore was crushed into a -2 mm ore. To the -2 mm oxide ore was added marine water to obtain a 28 wt% concentration slurry ore. Then, 98 wt% concentration sulfuric acid was added in a 0.73 times amount to the whole amount of the oxide ore before classification, and the mixture was stirred for 6 hours at a temperature of 95 °C and an atmospheric pressure to leach the mixture.

To the sulfuric acid leachate and the leaching residue thus obtained was added an oxide ore as a slurry ore with a 40 wt% concentration prepared by adding marine water to the crushed ore from the +2 mm oxide ore. The mixture was reacted by stirring at a temperature of 95 °C and an atmospheric pressure for 6 hours. A leaching rate after the atmospheric-pressure reaction was checked to obtain the results: Ni: 88.9 %, Co: 63.6 %, Fe: 5.7 % and Mg: 87.8 %. The atmospheric-pressure reaction solution showed the following concentration results: Ni : 5.53 g/L, Co: 0.20 g/L, Fe : 4.32 g/L and Mg: 38.38 g/L. A leaching rate for nickel was satisfactory while a leaching rate for cobalt was insufficient.

### (Example 1)

An experiment was performed under the same conditions described in Comparative Example 1 with the same oxide ore, except that in the leaching step, iron powder was added in 0.003 times amount to the total amount of the oxide ore. A leaching rate of nickel was 89.0 wt%, which was substantially same to Comparative Example 1, while a leaching rate of cobalt was increased to 80.2 wt%.

### (Example 2)

An experiment was performed under the same conditions described in Comparative Example 1 with the same oxide ore, except that in the leaching step, sodium sulfite was used in 0.05 times amount to the total amount of the oxide ore.

### (Example 3)

An experiment was performed under the same conditions described in Comparative Example 1 with the same oxide ore, except that water was river water; Na₂SO₄ as a sodium salt was used in 0.025 times amount to the total amount of the oxide ore; and in the leaching step, iron powder was added in 0.005 times amount to the total amount of the oxide ore.

### (Example 4)

An experiment was performed under the same conditions described in Comparative Example 1 with the same oxide ore, except that water was river water; NaCl as a sodium salt was used in 0.025 times amount to the total amount of the oxide ore; and in the reaction step, sodium sulfite was added in 0.08 times amount to the total amount of the oxide ore.

### (Example 5)

An experiment was performed under the same conditions described in Comparative Example 1 with the same oxide ore, except that in the reaction step, iron powder was added in 0.005 times amount to the total amount of the oxide ore. With described above, for the oxide ore No. 1, by adding iron powder or sodium sulfite, a leaching rate of cobalt was improved by 15 wt% to 20 wt%.

### (Comparative Example 2)

The oxide ore No. 2 was classified with a 2 mm screen into a -2 mm oxide ore and a +2 mm oxide ore in 61 wt% and 39 wt%, respectively. The whole amount of the +2 mm oxide ore was crushed into a -2 mm ore. To the -2 mm oxide ore was added marine water to obtain a slurry with a concentration of 28 wt%. Then, 98 wt% concentration sulfuric acid was added in 0.73 times amount to the total amount of the oxide ore before classification. Then, the mixture was leached by stirring for 6 hours at a temperature of 95 °C and an atmospheric pressure. To the mixture of the sulfuric acid leachate and the leaching residue thus obtained was added a crushed ore from the +2 mm oxide ore as a 40 wt% concentration slurry with marine water, and the mixture was reacted by stirring for 6 hours at a temperature of 95 °C and an atmospheric pressure.

A leaching rate after the reaction was checked to obtain the results: Ni : 87.0 %, Co : 13.3 %, Fe : 4.5 % and Mg : 80.4 %, and concentrations in the reaction solution were Ni : 6.56 g/L, Co : 0.17 g/L, Fe : 4.39 g/L and Mg : 35.30 g/L. A leaching rate of nickel was satisfactory while a leaching rate of cobalt was insufficient.

### (Example 6)

An experiment was performed under the same conditions described in Comparative Example 2 with the same oxide ore, except that in the leaching step, iron powder was added in 0.003 times amount to the total amount of the oxide ore. Then, a leaching rate of nickel was 92.2 wt% and a leaching rate of cobalt was 87.0 wt%. The leaching rates were significantly increased by about 5 wt% and 74 wt% for nickel and cobalt, respectively.

### (Example 7)

An experiment was performed under the same conditions described in Comparative Example 2 with the same oxide ore, except that in the leaching step, sodium sulfite was used in 0.05 times amount to the total amount of the oxide ore.

### (Example 8)

An experiment was performed under the same conditions described in Comparative Example 2 with the same oxide ore, except that water was river water; Na₂SO₄ as a sodium salt was used in 0.025 times amount to the total amount of the oxide ore; and in the leaching step, iron powder was added in 0.005 times amount to the total amount of the oxide ore.

### (Example 9)

An experiment was performed under the same conditions described in Comparative Example 2 with the same oxide ore, except that water was river water; NaCl as a sodium salt was used in 0.025 times amount to the total amount of the oxide ore; and in the reaction step, sodium sulfite was added in 0.08 times amount to the total amount of the oxide ore.

### (Example 10)

An experiment was performed under the same conditions described in Comparative Example 2 with the same oxide ore, except that in the reaction step, iron powder was added in 0.005 times amount to the total amount of the oxide ore.

With above described, for the oxide ore No. 2 derived from a different mine from that for the oxide ore No. 1, by adding iron powder or sodium sulfite, a leaching rate of nickel was improved and a leaching rate of cobalt was significantly increased by 64 wt % to 82 wt%.

## Claims

1. A process for leaching nickel or cobalt from an oxide ore containing nickel or cobalt and iron, comprising:
a classification step where said oxide ore is classified into a small particle oxide ore and a large particle oxide ore;
a leaching step where a reducing agent selected from iron powder or a mixture of iron powder and sodium sulfite and sulfuric acid are added to said small particle oxide ore to obtain a sulfuric acid leachate containing nickel or cobalt and a leaching residue; and
a reaction step where said sulfuric acid leachate containing said leaching residue is reacted with said large particle oxide ore to obtain a reaction solution containing nickel or cobalt and a reaction residue containing iron.

2. The process according to Claim 1, wherein both said leaching step and said reaction step are performed at a temperature of 90 °C or higher.

3. The process according to Claim 1 or 2, wherein both said leaching step and said reaction step are performed at an atmospheric pressure.

4. The process according to Claim 1, wherein
in the leaching step a sodium salt is further added to the oxide ore;
in the reaction step, said sulphuric acid leachate containing said leaching residue is reacted with magnesium contained in said large particle oxide ore for adjusting a pH to obtain a reaction solution containing nickel or cobalt and a reaction residue containing iron; and
said process further comprises a neutralization step where said reaction solution containing said reaction residue is neutralized with a neutralizing agent to obtain a neutralization solution containing nickel or cobalt and a neutralization residue containing iron.

5. The process according to claim 4, further comprising:
separating said neutralization solution and said neutralization residue by solid-liquid separation using a thickener with a flocculant after said neutralization step.

6. The process according to Claim 4 or 5, wherein both said leaching step and said reaction step are performed at a temperature of 90 °C or higher.

7. The process according to Claims 4 to 6, wherein both said leaching step and said reaction step are performed at an atmospheric pressure.

## Patentansprüche

1. Verfahren zur Auslaugung von Nickel oder Cobalt aus einem Nickel oder Cobalt und Eisen enthaltenden oxidischen Erz, umfassend:
einen Klassierungsschritt, in dem das oxidische Erz in ein oxidisches Erz mit kleinen Partikeln und ein oxidisches Erz mit großen Partikeln klassiert wird;
einen Auslaugungsschritt, in dem ein Reduktionsmittel, ausgewählt aus Eisenpulver oder einem Gemisch aus Eisenpulver und Natriumsulfit, und Schwefelsäure zu dem oxidischen Erz mit kleinen Partikeln hinzugegeben werden, um eine Schwefelsäurelauge enthaltend Nickel oder Cobalt und einen Auslaugungsrückstand zu erhalten; und
einen Reaktionsschritt, in dem die den Auslaugungsrückstand enthaltende Schwefelsäurelauge mit dem oxidischen Erz mit großen Partikeln umgesetzt wird, um eine Reaktionslösung enthaltend Nickel oder Cobalt und einen Eisen enthaltenden Reaktionsrückstand zu erhalten.

2. Verfahren nach Anspruch 1, wobei sowohl der Auslaugungsschritt als auch der Reaktionsschritt bei einer Temperatur von 90 °C oder höher durchgeführt werden.

3. Verfahren nach Anspruch 1 oder 2, wobei sowohl der Auslaugungsschritt als auch der Reaktionsschritt bei Atmosphärendruck durchgeführt werden.

4. Verfahren nach Anspruch 1, wobei
in dem Auslaugungsschritt weiterhin ein Natriumsalz zu dem oxidischen Erz hinzugegeben wird;
in dem Reaktionsschritt die den Auslaugungsrückstand enthaltende Schwefelsäurelauge mit in dem oxidischen Erz mit großen Partikeln enthaltenen Magnesium zur Einstellung eines pH-Wertes umgesetzt wird, um eine Nickel oder Cobalt enthaltende Reaktionslösung und einen Eisen enthaltenden Reaktionsrückstand zu erhalten; und
das Verfahren weiterhin einen Neutralisationsschritt umfasst, in dem die den Reaktionsrückstand enthaltende Reaktionslösung mit einem Neutralisationsmittel neutralisiert wird, um eine Neutralisationslösung enthaltend Nickel oder Cobalt und einen Eisen enthaltenden Neutralisationsrückstand zu erhalten.

5. Verfahren nach Anspruch 4, weiterhin umfassend:
Trennen der Neutralisationslösung und des Neutralisationsrückstandes durch Fest-Flüssig-Trennung unter Verwendung eines Verdickers mit einem Flockungsmittel nach dem Neutralisationsschritt.

6. Verfahren nach Anspruch 4 oder 5, wobei sowohl der Auslaugungsschritt als auch der Reaktionsschritt bei einer Temperatur von 90 °C oder höher durchgeführt werden.

7. Verfahren nach den Ansprüchen 4 bis 6, wobei sowohl der Auslaugungsschritt als auch der Reaktionsschritt bei Atmosphärendruck durchgeführt werden.

## Revendications

1. Procédé de lixiviation de nickel ou cobalt à partir d'un minerai d'oxyde contenant du nickel ou du cobalt et du fer, comprenant :
une étape de classification où ledit minerai d'oxyde est classifié en minerai d'oxyde à petites particules et minerai d'oxyde à grosses particules ;
une étape de lixiviation où un agent réducteur choisi parmi la poudre de fer ou un mélange de poudre de fer et de sulfite de sodium et d'acide sulfurique sont ajoutés audit minerai d'oxyde à petites particules pour obtenir un lixiviat d'acide sulfurique contenant du nickel ou du cobalt et un résidu de lixiviation ; et
une étape de réaction où ledit lixiviat d'acide sulfurique contenant ledit résidu de lixiviation réagit avec ledit minerai d'oxyde à grosses particules pour obtenir une solution de réaction contenant du nickel ou du cobalt et un résidu de réaction contenant du fer.

2. Procédé selon la revendication 1, dans lequel à la fois ladite étape de lixiviation et ladite étape de réaction sont réalisées à une température de 90 °C ou plus.

3. Procédé selon la revendication 1 ou 2, dans lequel à la fois ladite étape de lixiviation et ladite étape de réaction sont réalisées à une pression atmosphérique.

4. Procédé selon la revendication 1, dans lequel
dans l'étape de lixiviation, un sel de sodium est en outre ajouté au minerai d'oxyde ; dans l'étape de réaction, ledit lixiviat d'acide sulfurique contenant ledit résidu de lixiviation réagit avec le magnésium contenu dans ledit minerai d'oxyde à grosses particules afin d'ajuster un pH pour obtenir une solution de réaction contenant du nickel ou du cobalt et un résidu de réaction contenant du fer ; et
ledit procédé comprend en outre une étape de neutralisation où ladite solution de réaction contenant ledit résidu de réaction est neutralisée avec un agent de neutralisation pour obtenir une solution de neutralisation contenant du nickel ou du cobalt et un résidu de neutralisation contenant du fer.

5. Procédé selon la revendication 4, comprenant en outre :
la séparation de ladite solution de neutralisation et dudit résidu de neutralisation par séparation solide/liquide en utilisant un épaississant avec un floculant après ladite étape de neutralisation.

6. Procédé selon la revendication 4 ou 5, dans lequel à la fois ladite étape de lixiviation et ladite étape de réaction sont réalisées à une température de 90 °C ou plus.

7. Procédé selon les revendications 4 à 6, dans lequel à la fois ladite étape de lixiviation et ladite étape de réaction sont réalisées à une pression atmosphérique.
